# EUROPÄISCHE PATENTANMELDUNG

(11) **EP 4 686 794 A1**
(43) Veröffentlichungstag der Anmeldung: **04.02.2026**
(21) Anmeldenummer: 25176405.6
(22) Anmeldetag: 14.05.2025
(51) Int. Cl.: E04H 5/02, F04B 51/00, F25D 3/12, G01M 15/00, E04H 1/12

(54) **FRACHTCONTAINER MIT KÜHLVORRICHTUNG**

(30) Priorität: 29.07.2024 DE 102024121505
(71) Anmelder: IPETRONIK GmbH & Co. KG, 76532 Baden-Baden (DE)
(72) Erfinder: Pasch, Frank, 76534 Baden-Baden (DE); Zeitvogel, Bernd, 76437 Rastatt (DE); Anderer, Claus, 76571 Gaggenau (DE)
(74) Vertreter: Meissner Bolte Partnerschaft mbB

(57) **Zusammenfassung**

Die Erfindung betrifft ein Verfahren zur Herstellung eines Containers zur Kühlung einer technischen Vorrichtung, insbesondere eines Prüfstandes für eine technische Komponente, vorzugsweise für einen Kompressor, und/oder eines Batteriespeichers, umfassend eine Bereitstellung eines Frachtcontainers, und eine Integration einer Kühlvorrichtung (12) zur Kühlung einer Kühlflüssigkeit in den Frachtcontainer.

## Beschreibung

Die Erfindung betrifft einen Frachtcontainer mit integrierter Kühlvorrichtung zur Kühlung einer technischen Vorrichtung, insbesondere eines Prüfstandes für eine technische Komponente, vorzugsweise einen Kompressor, und/oder eines Batteriespeichers, und ein entsprechendes System sowie ein Verfahren zur Herstellung eines solchen Containers.

Komponentenprüfstände, bei denen zu prüfende technische Vorrichtungen, wie beispielsweise Kompressoren, gekühlt werden müssen, sind grundsätzlich bekannt. Außerdem müssen Batteriespeicher oftmals gekühlt werden. Die im vorliegenden Zusammenhang vorgeschlagenen Lösungen werden als vergleichsweise aufwendig empfunden.

Es ist Aufgabe der Erfindung, ein Konzept vorzuschlagen, mit dem auf einfache und zuverlässige Art und Weise entsprechende Vorrichtungen gekühlt werden können. Insbesondere soll ein entsprechendes Herstellungsverfahren, sowie eine entsprechende Vorrichtung bzw. System zur Kühlung vorgeschlagen werden.

Diese Aufgabe wird insbesondere durch eine Verfahren nach Anspruch 1 gelöst.

Insbesondere wird die Aufgabe durch ein Verfahren zur Herstellung eines Containers zur Kühlung einer technischen Vorrichtung, insbesondere eines Prüfstandes für eine technische Komponente, vorzugsweise für einen Kompressor, und/oder eines Batteriespeichers, gelöst, wobei das Verfahren eine Bereitstellung eines Containers, insbesondere Frachtcontainers, und eine Integration einer Kühlvorrichtung zur Kühlung einer Kühlflüssigkeit (zur Kühlung der technischen Vorrichtung) in den Frachtcontainer umfasst.

Ein Gedanke liegt darin, dass ein (bereits vorhandener) Container, insbesondere ein Frachtcontainer, mit einer Kühlvorrichtung ausgestattet ist, die konfiguriert ist, um eine Kühlflüssigkeit derart zu temperieren, dass technische Vorrichtungen damit gekühlt werden können. Dadurch kann auf einfache Art und Weise eine entsprechende Kühlung insbesondere für technische Vorrichtungen, wie Kompressoren, innerhalb von Prüfständen, und/oder eine effektive Kühlung von Batteriespeichern erfolgen.

Vorzugsweise wird die Kühlflüssigkeit in den Frachtcontainer integriert, ist also Bestandteil desselben. Die Kühlflüssigkeit kann ein Volumen bzw. Gewicht von mindestens 100 ml und/oder mindestens 100 g, vorzugsweise mindestens 1,0 Liter und/oder mindestens 1,0 kg, gegebenenfalls mindestens 10 Liter und/oder mindestens 10 kg aufweisen.

Die Kühlflüssigkeit kann in Gew.-% und/oder Vol.-% zu mindestens 10 %, vorzugsweise mindestens 50 % und/oder oder höchstens 99 %, vorzugsweise höchstens 90 % Wasser und/oder ein Öl und/oder einen Alkohol umfassen. Konkret kann die Kühlflüssigkeit eine (Kühl-)Sole sein.

In dem Container kann mindestens eine Anschlussvorrichtung, insbesondere mehrere Anschlussvorrichtungen, vorgesehen sein, um die Kühlflüssigkeit an der technische Vorrichtung vorbeizuführen und/oder durch diese hindurchzuleiten.

Die Kühlvorrichtung kann mindestens eine Wärmepumpe und/oder mindestens einen Wärmetauscher aufweisen. In dem Container kann mindestens eine Leitung für den Transport der Kühlflüssigkeit bereitgestellt werden bzw. sein.

Bei der Bereitstellung des Frachtcontainers kann ein Kühlcontainer und/oder ein Frachtcontainer, ggf. mit einer Wärmeisolierung, bereitgestellt werden.

Beispielsweise kann ein (Standard-)Container umgebaut werden. Alternativ oder zusätzlich kann ein bestehender Kühlcontainer umgebaut werden, insbesondere kann eine bestehende Kälteanlage des Kühlcontainers umgebaut und/oder eine neue Kälteanlage eingebaut werden (vorzugsweise um eine Kühlsole und/oder eine andere Kühlflüssigkeit bereitstellen zu können).

Bei Kühlcontainern mit bereits installierter Kälteanlage kann der Umbau von einem Luft- auf einen Luft-/Solebetrieb, um die Kühlflüssigkeit zur Kühlung der technischen Vorrichtung zu nutzen, erfolgen. Je nach Leistungsanforderung kann auch der Ausbau und Einbau einer neuen Anlage oder lediglich der Einbau einer neuen Anlage erfolgen.

Die Kühlflüssigkeit und/oder die technische Komponente kann in dem Container aufgenommen werden oder dort aufgenommen sein.

In einer bevorzugten Ausführungsform kann ein, insbesondere brennbares, Kältemittel in dem Container, insbesondere in der Kühlvorrichtung des Containers, aufgenommen werden.

Der Container ist vorzugsweise explosionsgeschützt ausgelegt (insbesondere um einen sicheren Betrieb zu gewährleisten). Der explosionsgeschützte Aufbau ist bedeutsam, um Risiken und Gefahren, die durch ein ggf. brennbares Kältemittel entstehen können, zu minimieren.

Ferner kann der Container mit mindestens einem (Leckage-)Sensor und/oder mindestens einer Ablufteinrichtung ausgestattet werden, insbesondere um bei möglichen Leckagen, besonders bei brennbaren Kältemitteln (ab einer bestimmten Konzentration), sicherheitshalber abgeschaltet und/oder mit Frischluft gespült zu werden.

Der Frachtcontainer kann ein gebrauchter Frachtcontainer sein. Dies bietet ökologische und wirtschaftliche Vorteile, da vorhandene Ressourcen genutzt und Kosten gesenkt werden können.

Der Container kann mit einem doppelten Boden versehen werden, insbesondere um Gase und/oder Fluide abzusaugen und so zusätzliche Sicherheit zu gewährleisten.

Der Container kann mit mindestens einer Tür und/oder mindestens einem Fenster ausgestattet werden. Derartige Öffnungen erleichtern den Zugang zu den technischen Vorrichtungen im Inneren des Containers und können zur Belüftung genutzt werden.

In einer besonders bevorzugten Ausführungsform handelt es sich bei dem Container um einen ISO-Container. Die einschlägigen Normen (zum Beispiel Maße, Halterungen, Stapelbarkeit) wurden koordiniert von der Internationalen Seeschifffahrts-Organisation (IMO) beschlossen und sind in der ISO-Norm 668 (Gültigkeit zum Prioritäts- bzw. Anmeldezeitpunkt der vorliegenden Anmeldung) festgelegt.

Derartige Container haben standardisierte Abmessungen, was die Handhabung und den Transport erleichtert. Beispielsweise kann der Container eine Breite von 8 Fuß und eine Höhe von 8 Fuß 6 Zoll oder 9 Fuß 6 Zoll sowie eine Länge von 10 Fuß, 20 Fuß, 40 Fuß oder 45 Fuß aufweisen.

Der Container (bzw. der bei der Herstellung verwendete Frachtcontainer) kann aufweisen: insbesondere im Falle eines 20-Fuß-Standardcontainers, ein Leergewicht von 2200 - 2600 kg, insbesondere 2300 kg; oder, insbesondere im Falle eines 40-Fuß-Standardcontainers, ein Leergewicht von 3500 - 4200 kg, insbesondere 3900 kg; oder, insbesondere im Falle eines 45-Fuß-Standardcontainers, ein Leergewicht von 4000 - 5500 kg, insbesondere 4800 kg; oder insbesondere im Falle eines 10-Fuß-Kühlcontainers, ein Leergewicht von 2000 - 2400 kg, insbesondere 2250 kg, oder 2600 - 3200 kg, insbesondere 2900 kg; oder, insbesondere im Falle eines 20-Fuß-Kühlcontainers, ein Leergewicht von 2600 - 3200 kg, insbesondere 2900 kg; oder, insbesondere im Falle eines 40-Fuß-Kühlcontainers, ein Leergewicht von 4000 - 5800 kg, insbesondere 4800 kg; oder, insbesondere im Falle eines 45-Fuß-Kühlcontainers, ein Leergewicht von 4000 - 6000 kg, insbesondere 5000 kg.

Die Lösung ist vorzugsweise trailerbar bzw. kann auf einem Anhänger transportiert werden.

Die Aufgabe wird insbesondere gelöst durch einen Container, vorzugsweise hergestellt nach dem obigen Verfahren, zur Kühlung einer technischen Vorrichtung, umfassend eine in dem Container aufgenommene Kühlvorrichtung zur Kühlung einer Kühlflüssigkeit (mittels der eine technische Vorrichtung und/oder ein Batteriespeicher kühlbar ist). Der Testraum im Container kann ggf. auf Raumtemperatur geregelt werden, um entsprechenden Anforderungen zu entsprechen. Je nach finalem Anwendungsfall kann eine bereits installierte Kälteanlage genutzt oder alternativ ein Umluft-Kühler (z. B. Split-Klimagerät) eingebaut werden, um den Raum zu temperieren, insbesondere zu kühlen. Es können auch Abgänge der Kälteanlage vorgesehen werden, um bei Bedarf Equipment außerhalb des Containers zu betreiben, z.B. zur Prüfung eines Fahrzeugkompressors direkt am Fahrzeug.

Die Aufgabe wird insbesondere gelöst durch ein Fahrzeug, insbesondere einen Lastkraftwagen, und einen auf und/oder in dem Fahrzeug aufgenommenen Container. Diese Konfiguration ermöglicht einen flexiblen Einsatz des Kühlcontainers, indem er auf einem Fahrzeug transportiert und an verschiedenen Einsatzorten verwendet werden kann.

Insbesondere wird die Aufgabe auch durch ein Verfahren zur Kühlung der technischen Komponente gelöst, bei dem mittels des (nach dem obigen und/oder nachfolgend beschriebenen Verfahren hergestellten oder gemäß der nachfolgenden Beschreibung ausgebildeten) Containers eine Kühlung der technischen Vorrichtung durchgeführt wird, wobei die Kühlflüssigkeit durch die technische Vorrichtung hindurch und/oder an dieser vorbei geleitet wird.

Vorzugsweise kann (bei der Kühlung und/oder Prüfung der technischen Vorrichtung) eine Temperatur in einem Testraum in dem Container, in dem die technische Vorrichtung untergebracht ist, auf Raumtemperatur (bzw. auf eine Temperatur in °C von mindestens 10, vorzugsweise mindestens 18 und/oder höchstens 30, vorzugsweise höchstens 25) gebracht, insbesondere geregelt, werden. Je nach Anwendungsfall kann hierbei eine bereits installierte Kälteanlage genutzt werden und/oder ein Umluftkühler (z. B. Split-Klimagerät).

Es können auch Abgänge der Kälteanlage vorgesehen werden, z. B. um bei Bedarf beispielsweise Equipment außerhalb des Containers zu testen bzw. zu kühlen. Beispielsweise kann eine Person ein Problem am Fahrzeug überprüfen, wobei sie z. B. einen Kompressor im Fahrzeug testen möchte. Hierzu könnte die Person das Equipment aus dem Container holen und direkt am Fahrzeug betreiben.

Eine dezentrale Nutzung des Konzepts ist möglich. Beispielsweise kann nur Strom zur Versorgung benötigt werden, wobei kein zusätzliches Equipment erforderlich ist.

Wenn eine Batterie vorhanden ist, insbesondere wenn der Container als Batteriespeicher genutzt wird, kann eine Energie für die Versorgung aus der/den Batterie(n) gezogen werden.

Eine Speicherkapazität des Batteriespeichers kann mindestens 100 kWh, ggf. mindestens 1000 kWh, und/oder höchstens 10 MWh betragen.

Der Container kann zum Einsatz kommen: Im Prüfstandsbetrieb für einen Komponentenprüfstand, bspw. Kompressorprüfstand; und/oder für bspw. brennbare Kältemittel, insbesondere wenn eine Auslegung (z. B. eines Lüfters) auch explosionsgeschützt ist; und/oder als (dezentraler) Batteriespeicher; und/oder für eine Gegend ohne Ladeinfrastruktur; und/oder als Pufferspeicher an Solar- und/oder Windkraftwerken.

Der Betrieb von sonstigem Equipment, welches durch die kühlflüssigkeit (Sole) versorgt wird (bspw. Klimaschränke), ist ebenfalls möglich. Zudem kann der Container als Klimakammer selbst genutzt werden.

Durch die beschriebenen Merkmale und Maßnahmen wird eine effektive und sichere Kühlung technischer Vorrichtungen innerhalb eines Frachtcontainers ermöglicht. Der Container kann vorzugsweise flexibel eingesetzt und/oder leicht transportiert werden, wodurch er sich besonders für mobile Prüfstände, dezentrale Batteriespeicher in Gegenden ohne Ladeinfrastruktur, Pufferspeicher an Solar- und/oder Windkraftwerken und sonstige Anwendungen eignet, bei denen ein Kühlflüssigkeitskreis (Solekreis) zur Temperierung der technischen Komponente(n) nötig oder zumindest vorteilhaft ist.

Vorteilhafterweise kann eine (schnelle) Erweiterung von Testkapazitäten erfolgen. Testspitzen können abgepuffert werden. Eine Laborfläche und/oder Prüfstandskapazität kann vergrößert werden.

Weiterhin kann eine Vernetzung, z. B. über mindestens ein DAQ System (Data Acquisition System), das in den Container integrieren sein kann, realisiert sein., und zwar bspw. ein Logger und/oder ein PC, der bspw. an eine Cloud senden kann (z. B. über Datenkabel und/oder Modem).

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildung näher erläutert wird.

Hierbei zeigt:

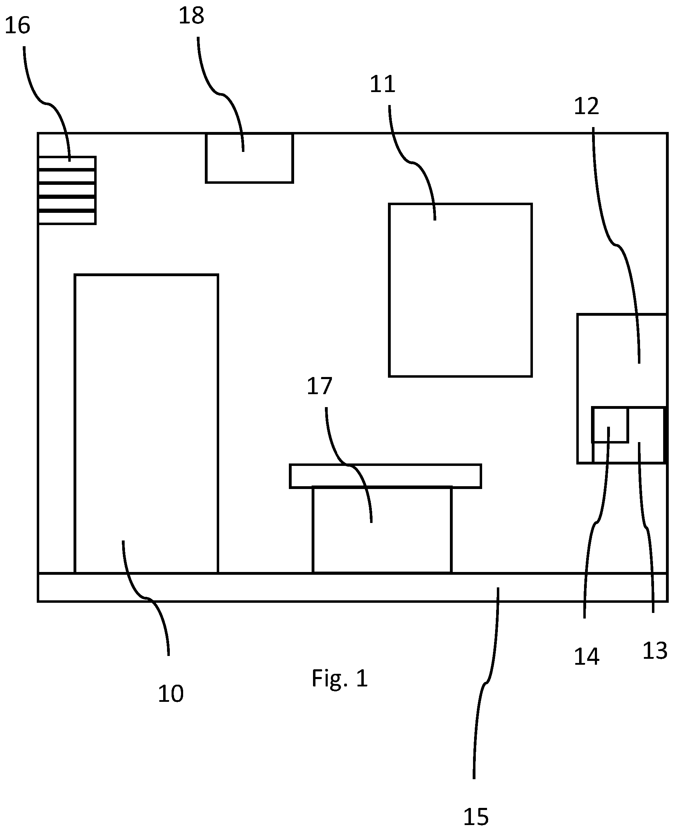

- Fig. 1: eine schematische Darstellung eines erfindungsgemäßen Containers.

In der nachfolgenden Beschreibung werden für gleiche und gleich wirkende Teile dieselben Bezugsziffern verwendet.

Fig. 1 zeigt hochschematisch einen Container, der auf der Grundlage eines Frachtcontainers hergestellt ist. Der Container umfasst mindestens eine Tür 10, mindestens ein Fenster 11 sowie mindestens eine Kältevorrichtung 12. Die Kältevorrichtung 12 ist ausgebildet, um eine Kühlflüssigkeit zu temperieren. Mit dieser Kühlflüssigkeit kann wiederum mindestens eine technische Vorrichtung, z. B. ein Prüfstand, gekühlt werden.

Die Kühlvorrichtung umfasst vorzugsweise mindestens eine Wärmepumpe 13, in der ein (brennbares) Kältemittel verwendet wird, um die Kühlflüssigkeit zu temperieren. Hierfür kann mindestens ein Wärmetauscher 14 vorgesehen sein.

Der Container enthält vorzugsweise einen doppelten Boden 15, um ein Fluid, insbesondere Gas, absaugen zu können. Dazu kann eine entsprechende Absaugvorrichtung vorgesehen sein.

Der Container kann mindestens ein Lüftungsgitter 16 enthalten.

Weiterhin kann der Container mindestens eine Sensorik aufweisen, insbesondere um eine Leckage eines (brennbaren) Kältemittels feststellen zu können. Weiterhin kann der Container mindestens einen (Arbeits-)Tisch 17 aufweisen und/oder mindestens eine Beleuchtung 18.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern etc. - oder in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern, keine im jeweiligen Kontext zwingende Merkmale kennzeichnen.

### Bezugszeichen

- 10: Tür
- 11: Fenster
- 12: Kühlvorrichtung
- 13: Wärmepumpe
- 14: Wärmetauscher
- 15: Boden
- 16: Gitter
- 17: Tisch
- 18: Beleuchtung

## Patentansprüche

1. Verfahren zur Herstellung eines Containers zur Kühlung einer technischen Vorrichtung, insbesondere eines Prüfstandes für eine technische Komponente, vorzugsweise für einen Kompressor, und/oder eines Batteriespeichers, umfassend:
a. eine Bereitstellung eines Frachtcontainers, und
b. eine Integration einer Kühlvorrichtung (12) zur Kühlung einer Kühlflüssigkeit in den Frachtcontainer.

2. Verfahren nach Anspruch 1, wobei unter a. ein Kühlcontainer und/oder ein Frachtcontainer mit einer Wärmeisolierung bereitgestellt wird.

3. Verfahren nach Anspruch 1 oder 2, wobei die Kühlflüssigkeit und/oder die technische Komponente in dem Container aufgenommen wird.

4. Verfahren nach einem der vorhergehenden Ansprüche, wobei ein, insbesondere brennbares, Kältemittel der Kühlvorrichtung (12) in dem Container aufgenommen wird.

5. Verfahren nach einem der vorhergehenden Ansprüche, wobei der Container explosionsgeschützt ausgelegt wird.

6. Verfahren nach einem der vorhergehenden Ansprüche, wobei der Frachtcontainer unter a. ein gebrauchter Frachtcontainer ist.

7. Verfahren nach einem der vorhergehenden Ansprüche, wobei der Container mit einem doppelten Boden versehen ist bzw. versehen wird.

8. Verfahren nach einem der vorhergehenden Ansprüche, wobei der Container mit mindestens einer Tür und/oder mindestens einem Fenster ausgestattet ist bzw. wird.

9. Verfahren nach einem der vorhergehenden Ansprüche, wobei eine Vernetzung, z. B. über mindestens ein DAQ System (Data Acquisition System), integriert wird.

10. Verfahren nach einem der vorhergehenden Ansprüche, wobei der Container ein ISO-Container ist und/oder aufweist:
eine Breite von 8 Fuß und/oder
eine Höhe von 8 Fuß 6 Zoll oder 9 Fuß 6 Zoll und/oder
eine Länge von 10, Fuß, 20 Fuß, 40 Fuß oder 45 Fuß.

11. Verfahren nach einem der vorhergehenden Ansprüche, wobei der Frachtcontainer unter a. ein ISO-Container ist; und/oder
aufweist:
eine Breite von 8 Fuß und/oder
eine Höhe von 8 Fuß 6 Zoll oder 9 Fuß 6 Zoll und/oder
eine Länge von 10 Fuß,20 Fuß, 40 Fuß oder 45 Fuß und/oder
i) insbesondere im Falle eines 20-Fuß-Standardcontainers, ein Leergewicht von 2200 - 2600 kg, insbesondere 2300 kg, oder
ii) insbesondere im Falle eines 40-Fuß-Standardcontainers, ein Leergewicht von 3500 - 4200 kg, insbesondere 3900 kg, oder
iii) insbesondere im Falle eines 45-Fuß-Standardcontainers, ein Leergewicht von 4000 - 5500 kg, insbesondere 4800 kg.
iv) insbesondere im Falle eines 10-Fuß-Kühlcontainers, ein Leergewicht von 2000 - 2400 kg, insbesondere 2250 kg, oder 2600 - 3200 kg, insbesondere 2900 kg, oder
v) insbesondere im Falle eines 20-Fuß-Kühlcontainers, ein Leergewicht von 2600 - 3200 kg, insbesondere 2900 kg, oder
vi) insbesondere im Falle eines 40-Fuß-Kühlcontainers, ein Leergewicht von 4000 - 5800 kg, insbesondere 4800 kg, oder
vi) insbesondere im Falle eines 45-Fuß-Kühlcontainers, ein Leergewicht von 4000 - 6000 kg, insbesondere 5000 kg.

12. Container, vorzugsweise hergestellt nasch einem der vorhergehenden Ansprüche, zur Kühlung einer technischen Vorrichtung, umfassend eine in dem Container aufgenommene Kühlvorrichtung (12) zur Kühlung einer Kühlflüssigkeit.

13. System, umfassend ein Fahrzeug, insbesondere Lastkraftwagen, und einen auf und/oder in dem Fahrzeug aufgenommenen Container nach dem unmittelbar vorhergehenden Anspruch.

14. Verfahren zur Kühlung einer technischen Komponente, bei dem mittels eines Containers, hergestellt nach einem der Ansprüche 1 bis 11 und/oder ausgebildet gemäß dem Anspruch 12, eine Kühlung der technischen Vorrichtung durchgeführt wird, wobei die Kühlflüssigkeit durch die technische Vorrichtung hindurch und/oder an dieser vorbei geleitet wird.
